# FASCICULE DE BREVET EUROPEEN

(11) **EP 3 131 005 B1**
(45) Date de publication et mention de la délivrance du brevet: **29.12.2021**
(21) Numéro de dépôt: 16184095.4
(22) Date de dépôt: 12.08.2016
(51) Int. Cl.: G06F 9/4401, G06F 11/14, G06F 8/65

(54) **EQUIPEMENT ÉLECTRONIQUE FERROVIAIRE COMPRENANT UN PROGRAMME DE DÉMARRAGE COMPORTANT UNE OU PLUSIEURS PARTITIONS DE DÉMARRAGE, VÉHICULE FERROVIAIRE ET SYSTÈME FERROVIAIRE ASSOCIÉS**
IN EINEM SCHIENENFAHRZEUG EINBAUBARE VORRICHTUNG, DIE EINEN STARTPROGRAMM MIT EINER OR MEHREREN STARTPARTITIONEN UMFASST, UND ASSOZIERTE SCHIENENFAHRZEUG UND EISENBAHNSYSTEM
TRAIN EMBEDDED ELECTRONIC DEVICE COMPRISING A BOOT PROGRAM WITH ONE OR MORE STARTPARTITIONS, AND THE ASSOCIATED TRAIN VEHICLE AND SYSTEM

(30) Priorité: 14.08.2015 FR 1557752
(43) Date de publication de la demande: 15.02.2017
(73) Titulaire: ALSTOM Transport Technologies, 93400 Saint-Ouen (FR)
(72) Inventeur: PLANCHE, Lilian, 69009 LYON (FR); RAFIN, Stephan, 38230 CHAVANOZ (FR)
(74) Mandataire: Lavoix

(56) Documents cités:
- US-A1- 2010 023 602
- US-B1- 7 487 343
- Anonymous: "QNX Neutrino RTOS - Instant Device Activation - User's Guide", , 10 May 2010 (2010-05-10), page i-x,1-52, XP055444501, Retrieved from the Internet: URL:http://support7.qnx.com/download/downl oad/20960/ida.pdf [retrieved on 2018-01-25]

## Description

La présente invention concerne un équipement électronique, tel qu'un équipement ferroviaire, comprenant un processeur et une unité mémoire associée au processeur, l'unité mémoire comportant un programme d'amorçage et au moins une partition de démarrage.

La présente invention concerne également un véhicule ferroviaire comprenant un tel équipement électronique ferroviaire.

La présente invention concerne également un système ferroviaire comprenant au moins un élément parmi un serveur de maintenance et un appareil électronique de maintenance, et au moins un véhicule ferroviaire comportant un tel équipement électronique ferroviaire.

On connait du document CN 102945176 A un équipement électronique du type précité. Cet équipement électronique comprend une unité de stockage de données contenant un programme d'amorçage (de l'anglais *boot program*)*,* ainsi que des première et deuxième partitions de démarrage (de l'anglais *boot partition*) pour améliorer la robustesse au démarrage de l'équipement électronique. Les première et deuxième partitions de démarrage ont le même système de fichiers pour le démarrage.

Lorsqu'une commande de démarrage est reçue, le programme d'amorçage charge la première partition de démarrage, vérifie l'intégrité de ladite partition et/ou effectue une vérification de redondance cyclique, également appelée calcul CRC (de l'anglais *Cyclic Redundancy Check*)*.* Le programme d'amorçage opère alors le démarrage à partir de cette première partition si la vérification effectuée est correcte. Sinon, le programme d'amorçage charge la deuxième partition de démarrage, et effectue le processus de démarrage à partir de cette deuxième partition. Le fait d'avoir deux partitions de démarrage redondantes permet alors d'améliorer la probabilité de pouvoir démarrer correctement l'équipement électronique.

US 7,487,343 B1 décrit un équipement électronique comprenant un processeur et une unité mémoire associée au processeur, l'unité mémoire comportant un programme d'amorçage et au moins une partition de démarrage (de l'anglais *boot image*)*.* Chaque partition de démarrage comporte un noyau (de l'anglais *OS kernel*).

Toutefois, les partitions de démarrage occupent généralement un espace relativement important de l'unité de stockage de données, et le redémarrage d'un tel équipement est parfois délicat.

Le but de l'invention est donc de proposer un équipement électronique dont le redémarrage est amélioré, tout en ayant une ou plusieurs partitions de démarrage occupant un faible espace mémoire.

À cet effet, l'invention a pour objet un équipement électronique selon la revendication 1.

Suivant d'autres aspects avantageux de l'invention, l'équipement électronique est selon l'une quelconque des revendications 2 à 11.

L'invention a également pour objet un véhicule ferroviaire selon la revendication 12.

L'invention a également pour objet un système ferroviaire selon la revendication 13.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation schématique d'un système de maintenance ferroviaire selon l'invention, comprenant plusieurs équipements électroniques, un serveur de maintenance et un appareil électronique de maintenance, reliés entre eux via un réseau ;
- la figure 2 est une représentation schématique de l'un des équipements électroniques de la figure 1 ;
- la figure 3 est un organigramme d'une séquence de démarrage en mode nominal de l'équipement électronique de la figure 2 ; et
- la figure 4 est une vue analogue à celle de la figure 3 pour un démarrage en mode dégradé.

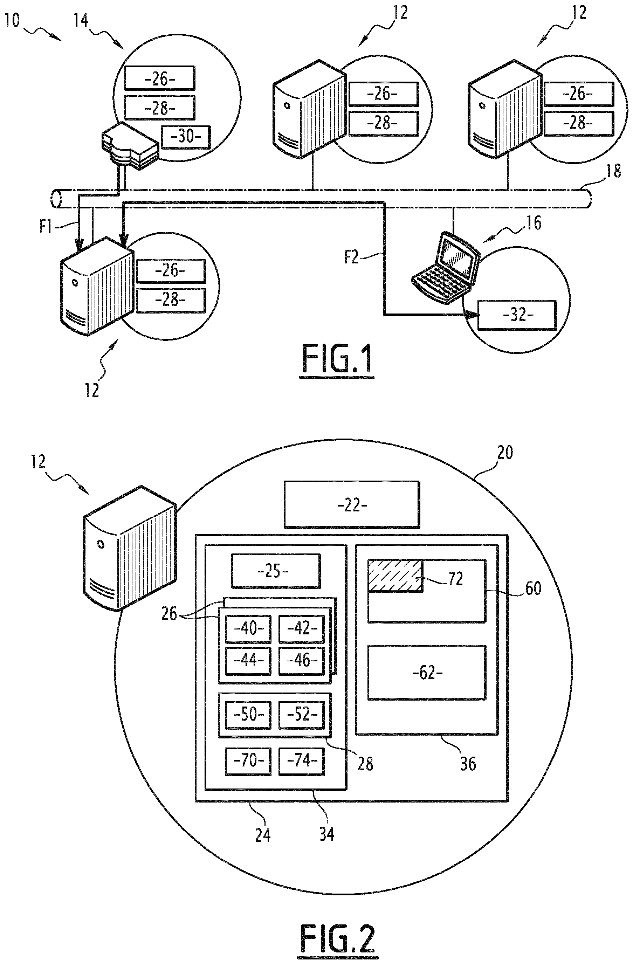

Sur la figure 1, un système 10 comprend plusieurs équipements électroniques 12, un serveur de maintenance 14 et un appareil électronique de maintenance 16, les équipements électroniques 12, le serveur de maintenance 14 et l'appareil électronique de maintenance 16 étant reliés par l'intermédiaire d'un réseau 18, tel qu'un réseau local.

Le système 10 est par exemple un système ferroviaire et comprend en outre au moins un véhicule ferroviaire, non représenté. Au moins l'un des équipements électroniques 12 est alors embarqué à l'intérieur de l'un des véhicules ferroviaires et est alors appelé équipement électronique ferroviaire. L'appareil de maintenance 16, relié à l'équipement ferroviaire 12 est alors configuré pour envoyer une ou plusieurs requêtes à destination de l'équipement ferroviaire 12, afin d'effectuer la maintenance du véhicule ferroviaire à l'intérieur duquel se trouve l'équipement ferroviaire 12.

Chaque équipement électronique 12 comprend une unité de traitement d'informations 20 formée par exemple d'un processeur 22 et d'une unité mémoire 24 associée au processeur 22, l'unité mémoire 24 comportant un programme d'amorçage 25, au moins une partition de démarrage 26 et une partition applicative 28.

Le serveur de maintenance 14 est configuré pour charger, dans chaque équipement électronique 12, la partition de démarrage 26 et la partition applicative 28, chacune dans leur dernière version. Le serveur de maintenance 14 comprend alors la partition de démarrage 26 et la partition applicative 28, ainsi qu'un module 30 de chargement dans l'équipement électronique correspondant 12 de la partition 26, 28 correspondante, comme représenté par la flèche F1 à la figure 1.

En complément facultatif, le serveur de maintenance 14 est également configuré pour envoyer des requêtes à destination d'un équipement électronique 12 qui est en phase de maintenance. Le serveur de maintenance 14 est alors configuré pour recevoir de la part de l'équipement électronique correspondant 12 les données envoyées en réponse à chaque requête émise.

L'appareil de maintenance 16 comprend un module de maintenance 32, tel qu'un module de test, configuré pour échanger des données avec chaque équipement électronique 12 par l'intermédiaire du réseau 18, comme représenté par la flèche F2 à la figure 1.

L'appareil de maintenance 16 est notamment configuré pour envoyer des requêtes, par l'intermédiaire de son module de maintenance 32, à destination d'un équipement électronique 12 qui est en phase de maintenance. Le module de maintenance 32 est alors configuré pour recevoir de la part de l'équipement électronique correspondant 12 les données envoyées en réponse à chaque requête émise.

En complément facultatif, l'appareil de maintenance 16 est également configuré pour charger, dans chaque équipement électronique 12, la partition de démarrage 26 et la partition applicative 28, chacune dans leur dernière version. L'appareil de maintenance 16 comprend alors la partition de démarrage 26 et la partition applicative 28, ainsi qu'un module de chargement dans l'équipement électronique correspondant 12 de la partition 26, 28 correspondante.

L'appareil de maintenance 16 est un appareil externe à chaque équipement électronique 12 et connu en soi. L'appareil de maintenance 16 est par exemple un ordinateur classique, fonctionnant par exemple avec le système d'exploitation Windows, sur lequel le module de maintenance 32 est installé, le module de maintenance 32 étant par exemple un logiciel exécutable par le processeur de cet ordinateur. En variante, l'appareil externe 16 est un équipement électronique embarqué incluant un composant logiciel dédié.

Le réseau 18 est connu en soi, et est par exemple un réseau Ethernet. Le réseau 18 est par exemple un réseau ferroviaire.

Le processeur 22 est connu en soi, et est également appelé CPU (de l'anglais *Central Processing Unit*)*.* Le processeur 22 est par exemple un microprocesseur. En variante, le processeur 22 comporte un ou plusieurs composants logiques programmables.

L'unité mémoire 24 comporte une mémoire non volatile 34 et une mémoire volatile 36, la mémoire non volatile 34 étant apte à stocker le programme d'amorçage 25 et la ou les partitions de démarrage 26.

Dans l'exemple de la figure 2, l'unité mémoire 24 comporte deux partitions de démarrage 26 redondantes. En variante, l'unité mémoire 24 comporte une seule partition de démarrage 26. En variante encore, l'unité mémoire 24 comporte au moins trois partitions de démarrage 26 redondantes.

Chaque partition de démarrage 26 comporte un noyau 40, un gestionnaire de configuration de réseau 42 et un gestionnaire de requête 44. En complément facultatif, chaque partition de démarrage 26 comporte un module de lancement primaire 46, apte à être exécuté par le programme d'amorçage 25.

Le programme d'amorçage 25 est alors configuré pour commander, pour la partition de démarrage 26 correspondante, le lancement du noyau 40, du gestionnaire de configuration réseau 42 et du gestionnaire de requête 44, par exemple via l'exécution du module de lancement primaire 46.

Les partitions de démarrage 26 sont dites redondantes lorsqu'elles comportent chacune le noyau 40, le gestionnaire de configuration de réseau 42 et le gestionnaire de requête 44. Les partitions de démarrage 26 redondantes sont de préférence identiques.

Dans l'exemple de la figure 2, chaque partition de démarrage 26 est constituée du noyau 40, du gestionnaire de configuration de réseau 42, du gestionnaire de requête 44 et du module de lancement primaire 46.

Le programme d'amorçage 25 est configuré en outre pour vérifier l'intégrité de la partition de démarrage 26 ou d'au moins l'une des partitions de démarrage 26. La vérification de l'intégrité est par exemple effectuée avec une somme de contrôle, telle qu'un calcul de vérification de redondance cyclique, également appelé calcul CRC, ou encore avec une fonction de hachage.

Le programme d'amorçage 25 est également configuré pour sélectionner la ou l'une des partitions de démarrage 26 et pour commander, pour la partition de démarrage 26 sélectionnée, le lancement du noyau 40, du gestionnaire de configuration de réseau 42 et du gestionnaire de requête 44, par exemple via l'exécution du module de lancement primaire 46.

La partition applicative 28 comporte au moins une application logicielle 50 et un module de lancement secondaire 52 configurés pour exécuter à l'aide du processeur 22 chaque application logicielle 50. Le module de lancement primaire 46 est alors configuré en outre pour commander l'exécution du module de lancement secondaire 52, par exemple après l'exécution du noyau 40, du gestionnaire de configuration de réseau 42 et du gestionnaire de requête 44 de la partition de démarrage 26 correspondante. Autrement dit, la ou les applications logicielles 50 sont exécutées par l'intermédiaire du processeur 22 par exemple après l'exécution des différents éléments de la partition de démarrage 26 sélectionnée, c'est-à-dire après l'exécution, via le processeur 22, du noyau 40, du gestionnaire de configuration de réseau 42 et du gestionnaire de requête 44.

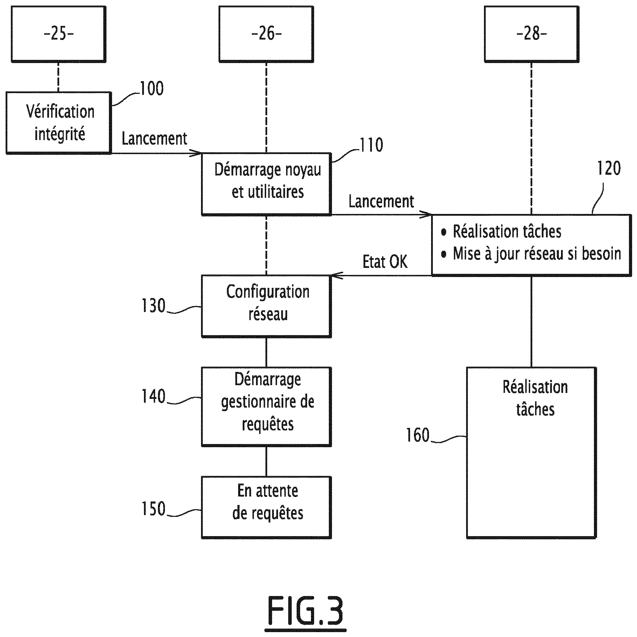

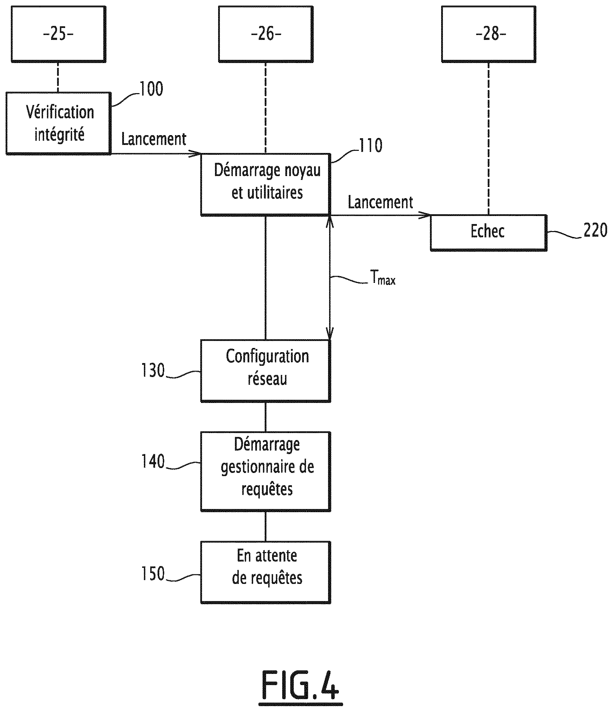

En variante ou en complément facultatif, une ou plusieurs applications logicielles 50 sont exécutées par l'intermédiaire du processeur 22 en parallèle de l'exécution des différents éléments de la partition de démarrage 26 sélectionnée, comme représenté sur les figures 3 et 4.

La mémoire volatile 36 comporte une zone mémoire d'exécution 60 et une zone mémoire de stockage 62, la zone mémoire d'exécution 60 étant configurée pour l'exécution du programme d'amorçage 25, du noyau 40, du gestionnaire de configuration de réseau 42 et du gestionnaire de requête 44 de la partition de démarrage correspondante.

Chaque équipement 12 comprend en outre un module d'allocation 70 configuré pour allouer une partie 72 de la zone mémoire d'exécution 60 au gestionnaire de requête 44, puis pour réserver ladite partie allouée 72 pour l'exécution du gestionnaire de requête 44 et conserver le gestionnaire de requête 44 comme résidant dans ladite partie allouée 72. Le module d'allocation 70 est de préférence inclus directement dans le noyau 40, et est alors par exemple mis en oeuvre par un service de gestion de la mémoire volatile 36.

Le noyau 40 est par exemple un noyau de type Linux. Dans l'exemple de la figure 2, le noyau 40 est un noyau comportant un minimum de services, afin d'occuper un minimum d'espace mémoire dans la mémoire non volatile 34.

Le noyau 40 comporte par exemple les services suivants : gestion de la mémoire volatile, gestion des entrées/sorties, gestion du système de fichier, gestion du réseau, invite de commande.

Le gestionnaire de configuration de réseau 42 est adapté pour configurer une ou plusieurs couches réseau, non représentées, afin de permettre une communication de l'équipement électronique 12 avec le réseau 18.

En complément facultatif, chaque partition de démarrage 26 comprend un serveur mandataire, également appelé proxy, non représenté, adapté pour intercepter des requêtes de chargement de la part du module de maintenance 32. Autrement dit, le proxy est configuré pour rediriger des requêtes issues du module de maintenance 32.

En variante, la redirection des requêtes est effectuée par le gestionnaire de requête 44. En variante encore, les requêtes issues du module de maintenance 32 sont directement adressées au bon destinataire, et ne nécessitent pas d'être redirigées.

Le gestionnaire de requête 44 est, selon l'invention, configuré pour, après son lancement, être apte à recevoir en permanence au moins une requête de la part de l'appareil externe 16.

Le gestionnaire de requête 44 est par exemple un processus informatique configuré pour s'exécuter en arrière-plan, tel qu'un démon lorsque le noyau 40 est un noyau de type Linux.

Le gestionnaire de requête 44 dépend en outre d'au moins une bibliothèque de fonction(s) 74 apte à être stockée dans la mémoire non volatile 34, et le gestionnaire de requête 44 est alors relié de manière statique à chaque bibliothèque 74 dont il dépend. Cette liaison statique du gestionnaire de requête 44 à chaque bibliothèque 74 dont il dépend est par exemple effectuée lors de la compilation des différents éléments de la partition de démarrage 26, en particulier lors de la compilation du gestionnaire de requête 44.

En complément facultatif, le gestionnaire de requête 44 comporte en outre un serveur web, non représenté, adapté pour émettre et recevoir des requêtes web.

Le module de lancement primaire 46 est configuré pour créer, de préférence, dans la mémoire volatile 36, la zone de mémoire de stockage 62, celle-ci étant allouée à la partition de démarrage 26 correspondante. Le module de lancement primaire 46 est configuré en outre pour charger ensuite, dans la zone de mémoire de stockage 62, le noyau 40, le gestionnaire de configuration de réseau 42, le gestionnaire de requête 44, et le cas échéant le proxy, de ladite partition de démarrage 26.

En complément facultatif, le module de lancement primaire 46 est configuré en outre pour conserver l'allocation de ladite zone mémoire de stockage 62 dans la mémoire volatile 36 pendant tout le fonctionnement de l'équipement électronique 12.

Le module de lancement primaire 46 est configuré en outre pour commander l'exécution de chacun des éléments de la partition de démarrage 26 correspondante autres que lui-même, c'est-à-dire pour commander l'exécution par le processeur 22 du noyau 40, du gestionnaire de configuration de réseau 42, du gestionnaire de requête 44, et le cas échéant du proxy.

La séquence de démarrage de l'équipement électronique 12 selon l'invention va désormais être expliquée à l'aide des figures 3 et 4 représentant un organigramme de la séquence de démarrage en mode nominal, et respectivement en mode dégradé.

Sur la figure 3, le programme d'amorçage 25 commence par vérifier, lors de l'étape 100, l'intégrité de la ou des partitions de démarrage 26, au minimum de la partition de démarrage 26 sélectionnée, par exemple avec un calcul d'une somme de contrôle. Ceci permet de s'assurer que la partition de démarrage 26 qui va être utilisée pour démarrer l'équipement électronique 12 n'est pas corrompue.

Comme indiqué précédemment, la vérification d'intégrité de la ou des partitions de démarrage 26 correspondantes est effectuée via un calcul de CRC ou encore via l'application d'une fonction de hachage sur le contenu de ladite partition de démarrage 26, avec comparaison ensuite de la valeur obtenue par cette fonction de hachage avec une valeur prédéterminée.

Lors de l'étape de vérification d'intégrité 100, si le programme d'amorçage 25 détecte qu'une première partition de démarrage 26 n'est pas intègre, c'est-à-dire est corrompue, alors le programme d'amorçage 25 effectue le démarrage à partir de la partition de démarrage 26 suivante.

Lorsque l'unité mémoire 24 comporte une unique partition de démarrage 26 et que le programme d'amorçage 25 détecte une corruption de cette unique partition de démarrage 26, alors le programme d'amorçage 25 arrête le démarrage de l'équipement électronique 12 correspondant et signale cette corruption de la partition de démarrage 26.

Le fait d'avoir plusieurs partitions de démarrage 26 redondantes, permet alors de réduire le risque de défaillance de l'équipement électronique 12. Ceci permet notamment le démarrage de l'équipement électronique 12 malgré la corruption d'une ou plusieurs partitions de démarrage 26 à partir du moment où il reste encore au moins une partition de démarrage 26 intègre qui permette d'effectuer le démarrage de l'équipement électronique 12.

L'homme du métier observera de manière plus générale que le fait d'augmenter le nombre de partitions de démarrage 26 redondantes permet d'augmenter le niveau de disponibilité de l'équipement électronique 12.

Après avoir vérifié l'intégrité de la ou des partitions de démarrage 26, le programme d'amorçage 25 commande le lancement du noyau 40 en lançant l'exécution, via le processeur 22, du module de lancement primaire 46.

Lors de l'étape suivante 110, le module de lancement primaire 46 commence alors par démarrer le noyau 40 et ses utilitaires associés. Le module de lancement primaire 46 commande ensuite le lancement d'au moins une application logicielle 50, via le lancement de l'exécution, via le processeur 22, du module de lancement secondaire 52.

Lors de l'étape 120, le module de lancement secondaire 52 commande l'exécution de la ou des applications logicielles 50 correspondantes, afin de réaliser certaines tâches, notamment les tâches suivantes : gestion de réseaux additionnels, gestion de matériel spécifique (coprocesseur spécialisé, capteur, clé matérielle de de configuration, liaison série, afficheur, ...), supervision du train (signalisation, traction, informations passager, ...).

Le module de lancement secondaire 52 commande également la mise à jour du réseau 18 si besoin. Lorsque les différentes tâches au niveau de la partition applicative 28 ont été réalisées, le module de lancement secondaire 52 indique au module de lancement primaire 46 que l'application de la configuration réseau a été effectuée avec succès. Le module de lancement primaire 46 continue alors sa séquence de démarrage en parallèle du module de lancement secondaire 52.

Le module de lancement primaire 46 lance ensuite, lors de l'étape 130, la configuration du réseau 18 à l'aide du gestionnaire de configuration réseau 42, notamment pour configurer la ou les couches réseau correspondantes.

Lorsque la configuration réseau est effectuée, le module de lancement primaire 46 commande, lors de l'étape suivante 140, le démarrage du gestionnaire de requête 44 qui va alors être apte à recevoir en permanence une ou plusieurs requêtes de la part de l'appareil externe 16 ou du serveur de maintenance 14, et se placer en attente d'une ou plusieurs requêtes (étape 150).

Lors de l'étape suivante 160, notamment suite à la réception d'une requête, la ou les applications logicielles 50 réalisent différentes tâches au niveau de la partition applicative 28.

Le démarrage de l'équipement électronique 12 est alors effectué, et ce dernier est en mesure de recevoir en permanence au moins une requête de la part de l'appareil électronique externe 16 ou du serveur de maintenance 14, notamment une requête liée à la mise en oeuvre d'un test de maintenance, une demande d'identification, ou encore une demande de récupération d'enregistrements, de la part de l'appareil externe 16 ou du serveur de maintenance 14. Après avoir reçu cette requête de la part de l'appareil externe 16, l'équipement électronique 12 est bien entendu configuré pour traiter cette requête, préparer une réponse et envoyer ensuite la réponse correspondant à la requête, à destination de l'équipement externe 16.

L'organigramme de la figure 4 illustre le cas d'un démarrage de l'équipement électronique 12 en mode dégradé, lorsque la partition applicative 28 ne réagit pas suite au lancement du module de lancement secondaire 52, de la part du module de lancement primaire 46, comme représenté par l'étape d'échec 220 à la suite de l'étape 110 de démarrage du noyau.

Dans l'exemple de la figure 4, les étapes 100 et 110 sont identiques à celles précédemment décrites dans l'exemple de la figure 3, et ne sont pas décrites à nouveau.

Lorsqu'à la suite de l'étape de démarrage du noyau 110, le module de lancement primaire 46 commande le lancement d'une ou plusieurs applications logicielles 50 de la partition applicative 28 via le module de lancement secondaire 52, il déclenche également une temporisation maximale Tₘₐₓ afin d'effectuer l'étape de configuration du réseau 130 au plus tard à l'issue de cette temporisation maximale Tₘₐₓ, en cas d'absence de réponse de la part de la partition applicative 28.

Dans l'exemple de la figure 4, lorsque le lancement de la partition applicative 28 conduit à un échec (étape 220), alors le module de lancement primaire 46 lance, à l'issue de la temporisation maximale Tₘₐₓ, la configuration du réseau 18 lors de l'étape 130, l'étape 130 étant identique à celle décrite précédemment en regard de la figure 3.

A l'issue de l'étape de configuration du réseau 130, le module de lancement primaire 46 commande également de manière analogue à ce qui a été décrit pour la figure 3, lors de l'étape 140, le démarrage du gestionnaire de requête 44, cette étape de démarrage 140 du gestionnaire de requête étant identique à celle décrite précédemment. L'équipement électronique 12 est alors en attente de requête(s) (étape 150) de manière analogue à ce qui a été décrit précédemment pour la figure 3.

Ainsi, l'équipement électronique 12 est, après son démarrage, disponible en permanence pour recevoir une requête de la part de l'appareil externe 16 ou du serveur de maintenance 14, ce qui améliore sa maintenance, et facilite notamment sa mise à jour. Cette capacité de l'équipement électronique 12 à recevoir en permanence des requêtes de la part de l'appareil externe 16 ou du serveur de maintenance 14, à l'issue de son démarrage, est obtenue via la mise en oeuvre du gestionnaire de requête 44 configuré pour être apte à recevoir en permanence, après son lancement, au moins une requête de l'appareil externe 16 ou du serveur de maintenance 14.

Cette capacité du gestionnaire de requête 44 à recevoir en permanence une requête de la part de l'appareil externe 16 ou du serveur de maintenance 14 est par exemple obtenue de par l'allocation de la partie allouée 72 de la zone mémoire d'exécution 60 au gestionnaire de requête 44, puis la réservation de cette partie allouée 72 pour l'exécution du gestionnaire 44, le gestionnaire de requête 44 étant alors conservé comme résident dans la partie allouée 72 pendant tout le fonctionnement de l'équipement électronique 12. Autrement dit, des primitives de verrouillage mémoire sont utilisées pour verrouiller une partie de la mémoire volatile 36, afin de s'assurer que le gestionnaire de requête 44 ne manquera pas d'espace mémoire pour s'exécuter.

Le fait que le gestionnaire de requête 44 soit un processus informatique configuré pour s'exécuter en arrière-plan permet en outre de garantir la persistance du gestionnaire de requête. En particulier, le fait que le gestionnaire de requête 44 soit sous forme d'un démon lorsque le noyau 40 est de type Linux, permet d'améliorer encore la disponibilité du gestionnaire de requête 44.

Le chargement de l'ensemble des éléments minimaux de la partition de démarrage 26, c'est-à-dire du noyau 40, du gestionnaire de configuration de réseau 42 et du gestionnaire de requête 44 dans la zone mémoire de stockage 62, cette zone mémoire de stockage 62 étant allouée à la partition de démarrage 26 correspondante, permet d'améliorer l'accessibilité de ces éléments. La zone mémoire de stockage 62 est également appelée RAM disk.

Le fait que le noyau 40, le gestionnaire de configuration de réseau 42 et le gestionnaire de requête 44 soient chargés dans la zone mémoire de stockage 62 permet la mise à jour de l'intégralité de la partition de démarrage 26 puisqu'aucun fichier n'a besoin d'être verrouillé.

En complément facultatif, cette zone mémoire de stockage 62 n'est en outre pas libérée pendant le fonctionnement de l'équipement électronique 12 dans le but de garantir davantage l'accessibilité du noyau 40, du gestionnaire de configuration de réseau 42 et du gestionnaire de requête 44.

La liaison statique du gestionnaire de requête 44 avec chaque bibliothèque de fonction 74 dont il dépend permet de ne pas avoir de dépendance dynamique avec des bibliothèques externes, de minimiser l'espace mémoire occupé par le gestionnaire de requête 44 et de réduire encore le temps de démarrage de l'équipement électronique 12.

Par ailleurs, le fait que le gestionnaire de requête 44 comporte, en complément facultatif, son propre serveur web, permet de ne pas dépendre d'un serveur web tiers et de réduire encore davantage le temps de démarrage de l'équipement électronique 12.

On conçoit ainsi que l'invention a un impact minime sur le temps de démarrage de l'équipement électronique 12, et malgré la présence d'une ou plusieurs partitions de démarrage 26, l'invention a également un impact minime sur l'occupation de l'espace mémoire.

En complément, lorsque l'équipement électronique 12 comporte plusieurs partitions de démarrage 26 redondantes, l'équipement électronique 12 offre en outre une meilleure disponibilité et une plus grande fiabilité, puisque le démarrage ou le redémarrage de l'équipement électronique 12 reste possible même en cas de défaillance de l'une des partitions de démarrage 26.

## Revendications

1. Equipement électronique (12), tel qu'un équipement ferroviaire, comprenant :
- un processeur (22),
- une unité mémoire (24), associée au processeur (22) et comportant :
+ un programme d'amorçage (25),
+ au moins une partition de démarrage (26),
**caractérisé en ce que** chaque partition de démarrage (26) comporte un noyau (40), un gestionnaire de configuration de réseau (42) et un gestionnaire de requête (44), le gestionnaire de requête (44) étant configuré pour gérer au moins une requête reçue de la part d'un appareil électronique (16) externe à l'équipement électronique (12),
le programme d'amorçage (25) étant configuré pour commander, pour la ou l'une des partitions de démarrage (26), le lancement du noyau (40), du gestionnaire de configuration de réseau (42) et du gestionnaire de requête (44), et
**en ce que** le gestionnaire de requête (44) est configuré pour, après son lancement, être apte à recevoir en permanence au moins une requête de la part de l'appareil externe (16),
l'unité mémoire (24) comportant une mémoire non-volatile (34) et une mémoire volatile (36), la mémoire non-volatile (34) étant apte à stocker le programme d'amorçage (25) et la ou les partitions de démarrage (26), la mémoire volatile (36) comportant une zone mémoire d'exécution (60) configurée pour l'exécution du programme d'amorçage (25), du noyau (40), du gestionnaire de configuration de réseau (42) et du gestionnaire de requête (44) de la partition de démarrage correspondante,
l'équipement (12) comprenant en outre un module d'allocation (70) configuré pour allouer une partie (72) de la zone mémoire d'exécution (60) au gestionnaire de requête (44), puis pour réserver ladite partie allouée (72) pour l'exécution du gestionnaire de requête (44) et conserver le gestionnaire de requête (44) comme résident dans ladite partie allouée (72), et
l'équipement (12) comprenant en outre un module de lancement primaire (46) configuré pour créer, dans la mémoire volatile (36), une zone mémoire de stockage (62) allouée à la partition de démarrage (26) correspondante, puis pour charger, dans la zone mémoire de stockage (62), le noyau (40), le gestionnaire de configuration de réseau (42) et le gestionnaire de requête (44) de ladite partition de démarrage (26).

2. Equipement (12) selon la revendication 1, dans lequel le gestionnaire de requête (44) est un processus informatique configuré pour s'exécuter en arrière-plan.

3. Equipement (12) selon la revendication 1 ou 2, dans lequel le module de lancement primaire (46) est configuré en outre pour commander l'exécution du noyau (40), du gestionnaire de configuration de réseau (42) et du gestionnaire de requête (44) de ladite partition de démarrage (26).

4. Equipement (12) selon l'une quelconque des revendications précédentes, dans lequel le module de lancement primaire (46) est configuré en outre pour conserver l'allocation de ladite zone mémoire de stockage (62) dans la mémoire volatile (36) pendant tout le fonctionnement de l'équipement.

5. Equipement (12) selon l'une quelconque des revendications précédentes, dans lequel chaque partition de démarrage (26) est constituée du module de lancement primaire (46), du noyau (40), du gestionnaire de configuration de réseau (42) et du gestionnaire de requête (44).

6. Equipement (12) selon l'une quelconque des revendications précédentes, dans lequel, lorsque le gestionnaire de requête (44) dépend d'au moins une bibliothèque de fonction(s) (74), le gestionnaire de requête (44) est relié de manière statique à chaque bibliothèque (74) dont il dépend.

7. Equipement (12) selon l'une quelconque des revendications précédentes, dans lequel le gestionnaire de requête (44) comporte en outre un serveur web.

8. Equipement (12) selon l'une quelconque des revendications précédentes, dans lequel le programme d'amorçage (25) est configuré en outre pour vérifier l'intégrité de la ou d'au moins l'une des partitions de démarrage (26).

9. Equipement (12) selon l'une quelconque des revendications précédentes, dans lequel le programme d'amorçage (25) est configuré pour sélectionner la ou l'une des partitions de démarrage (26), et pour commander, pour la partition de démarrage (26) sélectionnée, le lancement du noyau (40), du gestionnaire de configuration de réseau (42) et du gestionnaire de requête (44),
notamment via l'exécution d'un module de lancement primaire (46), l'équipement (12) comprenant ledit module de lancement primaire (46).

10. Equipement (12) selon l'une quelconque des revendications précédentes, dans lequel l'unité mémoire (24) comporte en outre une partition applicative (28), la partition applicative (28) comportant au moins une application logicielle (50) et un module de lancement secondaire (52) configuré pour exécuter au moins une application logicielle (50) correspondante.

11. Equipement (12) selon l'une quelconque des revendications précédentes, dans lequel l'unité mémoire (24) comporte au moins deux partitions de démarrage (26) redondantes, chaque partition de démarrage (26) comportant le noyau (40), le gestionnaire de configuration de réseau (42) et le gestionnaire de requête (44).

12. Véhicule ferroviaire comprenant un équipement électronique ferroviaire (12), **caractérisé en ce que** l'équipement électronique (12) est conforme à l'une quelconque des revendications précédentes.

13. Système ferroviaire (10) comprenant :
- au moins un élément parmi un serveur de maintenance (14) et un appareil électronique de maintenance (16), et
- au moins un véhicule ferroviaire comportant un équipement électronique ferroviaire (12),
chaque élément parmi l'appareil de maintenance (16) et le serveur de maintenance (14) étant relié à l'équipement électronique (12) et étant configuré pour envoyer une ou plusieurs requêtes à destination de l'équipement électronique (12),
**caractérisé en ce que** l'équipement électronique (12) est conforme à l'une quelconque des revendications 1 à 11.

## Patentansprüche

1. Elektronische Ausrüstung (12), wie zum Beispiel eine Eisenbahnausrüstung, umfassend:
- einen Prozessor (22),
- eine Speichereinheit (24), die mit dem Prozessor (22) assoziiert ist und Folgendes umfasst:
+ ein Ladeprogramm (25),
+ mindestens eine Bootpartition (26),
**dadurch gekennzeichnet, dass** jede Bootpartition (26) einen Kern (40), einen Netzwerkkonfigurationsmanager (42) und einen Anforderungsmanager (44) umfasst, wobei der Anforderungsmanager (44) konfiguriert ist, um mindestens eine Anforderung zu verwalten, die seitens einer elektronischen Vorrichtung (16) außerhalb der elektronischen Ausrüstung (12) empfangen wird,
das Ladeprogramm (25) konfiguriert ist, um für die oder eine der Bootpartitionen (26) den Start des Kerns (40), des Netzwerkkonfigurationsmanagers (42) und des Anforderungsmanagers (44) zu steuern, und
dass der Anforderungsmanager (44) konfiguriert ist, um nach seinem Start in der Lage zu sein, kontinuierlich mindestens eine Anforderung seitens der externen Vorrichtung (16) zu empfangen,
die Speichereinheit (24) umfassend einen nicht-flüchtigen Speicher (34) und einen flüchtigen Speicher (36), wobei der nicht-flüchtige Speicher (34) in der Lage ist, das Ladeprogramm (25) und die Bootpartition(en) (26) zu speichern, der flüchtige Speicher (36) umfassend einen Ausführungsspeicherbereich (60), der für die Ausführung des Ladeprogramms (25), des Kerns (40), des Netzwerkkonfigurationsmanagers (42) und des Anforderungsmanagers (44) der entsprechenden Bootpartition konfiguriert ist,
die Ausrüstung (12) ferner umfassend ein Zuweisungsmodul (70), das konfiguriert ist, um dem Anforderungsmanager (44) einen Teil (72) des Ausführungsspeicherbereichs (60) zuzuweisen, um dann den zugewiesenen Teil (72) für die Ausführung des Anforderungsmanagers (44) zu reservieren und den Anforderungsmanager (44) in dem zugewiesenen Teil (72) als resident zu halten, und
die Ausrüstung (12) ferner umfassend ein primäres Startmodul (46), das konfiguriert ist, um in dem flüchtigen Speicher (36) einen Ablagespeicherbereich (62) zu erzeugen, der der entsprechenden Bootpartition (26) zugewiesen ist, um dann, in dem Ablagespeicherbereich (62), den Kern (40), den Netzwerkkonfigurationsmanager (42) und den Anforderungsmanager (44) der Bootpartition (26) zu laden.

2. Ausrüstung (12) nach Anspruch 1, wobei der Anforderungsmanager (44) ein Computerprozess ist, der konfiguriert ist, um im Hintergrund ausgeführt zu werden.

3. Ausrüstung (12) nach Anspruch 1 oder 2, wobei das primäre Startmodul (46) ferner konfiguriert ist, um die Ausführung des Kerns (40), des Netzwerkkonfigurationsmanagers (42) und des Anforderungsmanagers (44) der Bootpartition (26) zu steuern.

4. Ausrüstung (12) nach einem der vorherigen Ansprüche, wobei das primäre Startmodul (46) ferner konfiguriert ist, um die Zuweisung des Ablagespeicherbereichs (62) in dem flüchtigen Speicher (36) während des gesamten Betriebs der vorhergehend aufrechtzuerhalten.

5. Ausrüstung (12) nach einem der vorherigen Ansprüche, wobei jede Bootpartition (26) aus dem primären Startmodul (46), dem Kern (40), dem Netzwerkkonfigurationsmanager (42) und dem Anforderungsmanager (44) besteht.

6. Ausrüstung (12) nach einem der vorherigen Ansprüche, wobei, wenn der Anforderungsmanager (44) von mindestens einer Funktionsbibliothek (74) abhängt, der Anforderungsmanager (44) statisch mit jeder Bibliothek (74) verbunden ist, von der er abhängt.

7. Ausrüstung (12) nach einem der vorherigen Ansprüche, wobei der Anforderungsmanager (44) ferner einen Webserver umfasst.

8. Ausrüstung (12) nach einem der vorherigen Ansprüche, wobei das Ladeprogramm (25) ferner konfiguriert ist, um die Integrität der oder mindestens einer der Bootpartitionen (26) zu überprüfen.

9. Ausrüstung (12) nach einem der vorherigen Ansprüche, wobei das Ladeprogramm (25) konfiguriert ist, um es die oder eine der Bootpartitionen (26) auszuwählen und um, für die ausgewählte Bootpartition (26), den Start des Kerns (40), des Netzwerkkonfigurationsmanagers (42) und des Anforderungsmanagers (44) zu steuern,
insbesondere durch die Ausführung eines primären Startmoduls (46), die Ausrüstung (12) umfassend das primäre Startmodul (46).

10. Ausrüstung (12) nach einem der vorherigen Ansprüche, wobei die Speichereinheit (24) ferner eine Anwendungspartition (28) umfasst, die Anwendungspartition (28) umfassend mindestens eine Softwareanwendung (50) und ein sekundäres Startmodul (52), das konfiguriert ist, um mindestens eine entsprechende Softwareanwendung (50) auszuführen.

11. Ausrüstung (12) nach einem der vorherigen Ansprüche, wobei die Speichereinheit (24) mindestens zwei redundante Bootpartitionen (26) umfasst, jede Bootpartition (26) umfassend den Kern (40), den Netzwerkkonfigurationsmanager (42) und den Anforderungsmanager (44).

12. Schienenfahrzeug, umfassend eine elektronische Eisenbahnausrüstung (12), **dadurch gekennzeichnet, dass** die elektronische Ausrüstung (12) gemäß einem der vorherigen Ansprüche ist.

13. Eisenbahnsystem (10), umfassend:
- mindestens ein Element aus einen Wartungsserver (14) und einer elektronischen Wartungsvorrichtung (16), und
- mindestens ein Schienenfahrzeug, umfassend eine elektronische Eisenbahnausrüstung (12),
wobei jedes Element aus der Wartungsvorrichtung (16) und dem Wartungsserver (14) mit der elektronischen Ausrüstung (12) verbunden und konfiguriert ist, um eine oder mehrere Anforderungen zu senden, die an die elektronische Ausrüstung (12) gerichtet sind,
**dadurch gekennzeichnet, dass** die elektronische Ausrüstung (12) gemäß einem der Ansprüche 1 bis 11 ist.

## Claims

1. An electronic device (12), such as a train device, comprising:
- a processor (22),
- a memory unit (24), associated with the processor (22) and including:
+ a boot program (25),
+ at least one boot partition (26),
**characterized in that** each boot partition (26) includes a kernel (40), a network configuration manager (42) and a query manager (44), the query manager (44) being configured to manage at least one query received from an electronic apparatus (16) outside the electronic device (12),
the boot program (25) being configured to command, for the or one of the boot partitions (26), the activation of the kernel (40), the network configuration manager (42) and the query manager (44), and
**in that** the query manager (44) is configured so as to be able, after it is activated, to continuously receive at least one query from the outside apparatus (16),
the memory unit (24) including a non-volatile memory (34) and a volatile memory (36), the non-volatile memory (34) being able to store the boot program (25) and the boot partition(s) (26), the volatile memory (36) including an execution memory zone (60) configured to execute the boot program (25), the kernel (40), the network configuration manager (42) and the query manager (44) of the corresponding boot partition, and
the device (12) further comprising an allocation module (70) configured to allocate part (72) of the execution memory zone (60) to the query manager (44), then to reserve said part (72) allocated to execution of the query manager (44) and keep the query manager (74) resident in said allocated part (72),
the device (12) further comprising a primary activation module (46) configured to create, in the volatile memory (36), a memory storage zone (62) allocated to the corresponding boot partition (26), then to load, in the memory storage zone (62), the kernel (40), the network configuration manager (42) and the query manager (44) of said boot partition (26).

2. The device (12) according to claim 1, wherein the query manager (44) is a computer process configured to be run in the background.

3. The device (12) according to claim 1 or 2, wherein the primary activation module (46) is further configured to command the execution of the kernel (40), the network configuration manager (42) and the query manager (44) of said boot partition (26).

4. The device (12) according to claim any one of the preceding claims, wherein the primary activation module (46) is further configured to keep the allocation of said memory storage zone (62) in the volatile memory (36) throughout all of the operation of the device.

5. The device (12) according to any one of the preceding claims, wherein each boot partition (26) is made up of the primary activation module (46), the kernel (40), the network configuration manager (42) and the query manager (44).

6. The device (12) according to any one of the preceding claims, wherein, when the query manager (44) depends on at least one function library (74), the query manager (44) is statically linked to each library (74) on which it depends.

7. The device (12) according to any one of the preceding claims, wherein the query manager (44) further includes a web server.

8. The device (12) according to any one of the preceding claims, wherein the boot program (25) is further configured to verify the integrity of the or at least one of the boot partitions (26).

9. The device (12) according to any one of the preceding claims, wherein the boot program (25) is configured to select the or one of the boot partitions (26), and to command, for the selected boot partition (26), the activation of the kernel (40), the network configuration manager (42) and the query manager (44),
in particular via the execution of a primary activation module (46), the device (12) comprising said primary activation module (46).

10. The device (12) according to any one of the preceding claims, wherein the memory unit (24) further includes an application partition (28), the application partition (28) including at least one software application (50) and one secondary activation module (52) that is configured to run at least one corresponding software application (50).

11. The device (12) according to any one of the preceding claims, wherein the memory unit (24) includes at least two redundant boot partitions (26), each boot partition (26) including the kernel (40), the network configuration manager (42) and the query manager (44).

12. A rail vehicle comprising an electronic train device (12), **characterized in that** the electronic device (12) is according to any one of the preceding claims.

13. A rail system (10), comprising:
- at least one element from among a maintenance server (14) and an electronic maintenance apparatus (16), and
- at least one rail vehicle including an electronic train device (12),
each element from among the maintenance server (16) and the maintenance apparatus (14) being connected to the electronic device (12) and being configured to send one or several queries to the electronic device (12),
**characterized in that** the electronic device (12) is according to any one of claims 1 to 11.
